# EUROPEAN PATENT SPECIFICATION

(11) **EP 4 039 533 B1**
(45) Date of publication and mention of the grant of the patent: **15.05.2024**
(21) Application number: 22154805.0
(22) Date of filing: 02.02.2022
(51) Int. Cl.: B60L 53/68, B60L 53/65, H04L 67/125, B60L 53/31, B60L 53/14, B60L 53/30, G06Q 10/02, G06Q 50/06, G06Q 20/14, G06Q 20/18, G06Q 20/32, G06Q 20/40, B60L 53/66, G06Q 20/42, G07F 15/00, G06Q 50/40

(54) **METHOD AND SYSTEM FOR CHARGING ELECTRIC VEHICLE, AND STORAGE MEDIUM**
VERFAHREN UND SYSTEM ZUM LADEN EINES ELEKTRISCHEN FAHRZEUGS UND SPEICHERMEDIUM
PROCÉDÉ ET SYSTÈME DE CHARGE DE VÉHICULE ÉLECTRIQUE ET SUPPORT D'ENREGISTREMENT

(30) Priority: 08.02.2021 CN 202110172500
(43) Date of publication of application: 10.08.2022
(73) Proprietor: Sungrow Power Supply Co., Ltd., Hefei, Anhui 230088 (CN)
(72) Inventor: WANG, Jun, Hefei, 230088 (CN)
(74) Representative: Zacco Norway AS

(56) References cited:
- EP-A1- 2 988 394
- EP-A1- 3 293 037
- WO-A1-2019/201293
- WO-A1-2020/043654
- WO-A2-2013/057587
- CN-A- 111 791 732
- US-A1- 2017 261 331

## Description

### FIELD

The present disclosure relates to the technical field of electric vehicle, and in particular to a method and a system for charging an electric vehicle, and a storage medium.

### BACKGROUND

As development of the new energy industry being vigorously promoted in various countries, a market share of electric vehicles is becoming higher and higher, and charging stations for charging the electric vehicles also develops increasingly. Generally, a large charging station may have a dozen or even hundreds of charging piles, and each of the charging piles is equipped with at least two charging guns. A driver of an electric vehicle may use one of the charging guns to charge the electric vehicle.

A conventional mainstream method for charging an electric vehicle usually starts charging by scanning a QR code through an application program (APP). However, an efficiency of scanning a QR code by a user will be substantially reduced at night or under a strong light condition; and the QR code may fail to be scanned if is damaged or stained.
Patent Application WO2020/043654A1 discloses a method for coordinating charging and/or discharging processes of mobile storage units via a portal connected to the Internet comprises the steps of: - providing data pertaining to a plurality of charging options by means of the portal, wherein each charging option has an associated charging station that is fed at least in part by a regenerative energy generation installation, and wherein the data contain information pertaining to a position associated with the charging option and to an energy price associated with the charging option, - receiving a request with request data from a communication device of a customer on the portal, - comparing the request data with the data of the charging options for at least some of the plurality of charging options, - generating a list of charging options in accordance with the comparison. Following selection of a charging option from the list, the following steps are performed: reserving a performance/time profile associated with the request and/or a charging station, associated with the request, for the selected charging option, and authorizing the customer to perform the charging and/or discharging process. The application furthermore relates to a portal connected to the Internet for performing the method.
Patent Application CN111791732A discloses a control system and method for an electric vehicle charging pile. The control system comprises a vehicle-mounted control device, a cloud server and the charging pile. The vehicle-mounted control device is configured to respond to the detected charging gun of the charging pile, acquire identification information of the charging pile through a communication interface of the charging gun and send the identification information to the cloud server; the cloud server is configured to respond to the identification information received from the vehicle-mounted control device, generate a charging pile control signal and send the charging pile control signal to the charging pile; and the charging pile is configured to charge the connected electric vehicle according to the charging pile control signal received from the cloud server.
Patent Application WO2013057587A2 discloses a method for managing the charging of an electric vehicle. The method includes receiving a request for a charge transfer for an electric vehicle over a network link between an electric vehicle charging station and a cloud server. The network link has a mobile device disposed between the electrical vehicle charging station and the cloud server for facilitating communication between the charging station and the cloud server. EP 2 988 394 A1, US 2017/261331 A1 each disclose method and system for charging an electric vehicle according to the state of the art.

### SUMMARY

A method and system for charging an electric vehicle, and a storage medium are provided in the present disclosure, which do not require a user to scan a code and are applicable for charging an electric vehicle under various conditions and lights.

According to a first aspect of the present disclosure, a method for charging an electric vehicle is provided in an embodiment of the present disclosure, including: acquiring a target charging user in a charging station and to-be-confirmed charging guns in the charging station, where the target charging user is a user requires charging of an electric vehicle in the charging station, and the to-be-confirmed charging gun is a charging gun which is inserted into an electric vehicle but is not started for charging; transmitting, to a terminal device of the target charging user, a charging gun list including information about the to-be-confirmed charging guns in the charging station; receiving, from the terminal device of the target charging user, information about a target charging gun selected by the target charging user from the charging gun list; and controlling the target charging gun to charge the electric vehicle.

In the invention, the acquiring a target charging user in a charging station includes:
receiving data information transmitted from the terminal device through an application program, wherein the data information includes user information of the application program and current positioning information of the terminal device; and determining, based on the data information, whether a user operating the terminal device is the target charging user.

In an embodiment, the determining whether a user operating the terminal device is the target charging user includes: determining whether a position indicated by the current positioning information is within a preset range, wherein the preset range covers at least a geographic range of the charging station; and determining that the user operating the terminal device is the target charging user if the position indicated by the current positioning information is within the preset range.

In an embodiment, after determining that the position indicated by the current positioning information is within the preset range, the method further includes: acquiring real-time positioning information of the terminal device during a first preset time period; determining whether positions indicated by the real-time positioning information of the terminal device acquired during the first preset time period are all within the preset range; and determining that the user operating the terminal device is the target charging user if the positions indicated by the real-time positioning information of the terminal device acquired during the first preset time period are all within the preset range.

In an embodiment, the method further includes: for any charging gun in the charging station, receiving, from a charging pile to which the charging gun belongs, a first signal, where the first signal is triggered when the charging gun is pulled out of the charging pile; receiving, from the charging pile, a second signal, where the second signal is triggered when the charging gun is inserted into an electric vehicle; and marking the charging gun as the to-be-confirmed charging gun in a case where an interval between a time when the first signal is received and a time when the second signal is received does not exceed a second preset time period.

In an embodiment, the method further includes: for any charging gun in the charging station, receiving, from a charging pile to which the charging gun belongs, a second signal, wherein the second signal is triggered when the charging gun is inserted into an electric vehicle; and marking, in response to the second signal, the charging gun as the to-be-confirmed charging gun.

In an embodiment, after receiving the data information transmitted form the terminal device through the application program, the method further includes: storing the data information; and deleting the data information when the data information is stored for a time period greater than or equal to a third preset time.

In an embodiment, the positioning information includes any one of latitude and longitude information, Global Positioning System, GPS, positioning information, and BeiDou Satellite Navigation System, BDS, positioning information.

According to a second aspect of the present disclosure, a system for charging an electric vehicle is provided according to an embodiment of the present disclosure. The system includes: at least one charging station; a terminal device installed with an application program; and a charging cloud platform including a processor, where the processor is configured to perform the method for charging an electric vehicle according to any of the above embodiments.

According to a third aspect of the present disclosure, a computer-readable storage medium is further provided according to an embodiment of the present disclosure. The computer-readable storage medium stores a computer program, and the computer program, when being executed by a processor, implements the method for charging an electric vehicle according to any of the above embodiments.

The method and system for charging an electric vehicle, and the storage medium are provided in the present disclosure. In the method, a target charging user of a charging station is acquired and to-be-confirmed charging guns in the charging station are acquired, where the target charging user is a user requires charging of the electric vehicle in the charging station, and the to-be-confirmed charging gun is a charging gun which is inserted into an electric vehicle but is not started for charging; a charging gun list is transmitted to a terminal device of the target charging user, where the charging gun list includes information about the to-be-confirmed charging guns in the charging station; information about a target charging gun selected by the target charging user from the charging gun list is received from the terminal device of the target charging user; and the target charging gun is controlled to charge the electric vehicle. With the above designed charging method, the charging cloud platform determines a target charging user based on positioning information reported by a user and transmit the user a charging gun list including the to-be-determined charging guns in the charging station, so that the user may select a target charging gun for charging. In this way, positioning and selecting of a user is realized at a charging cloud platform, which does not require the user to scan a code, and is thereby applicable for charging an electric vehicle under various conditions and lights.

### BRIEF DESCRIPTION OF THE DRAWINGS

Figure 1 is a schematic flowchart of a method for charging an electric vehicle according to an embodiment of the present disclosure;
Figure 2 is a schematic flowchart of a method for charging an electric vehicle according to another embodiment of the present disclosure;
Figure 3 is an interaction schematic diagram of a method for charging an electric vehicle according to an embodiment of the present disclosure;
Figure 4 is an interaction schematic diagram of a method for charging an electric vehicle according to another embodiment of the present disclosure;
Figure 5 is a schematic structural diagram of a charging cloud platform according to an example of the present disclosure;
Figure 6 is a schematic structural diagram of a charging cloud platform according to another example of the present disclosure; and
Figure 7 is a schematic structural diagram of a system for charging an electric vehicle according to an example of the present disclosure.

### DETAILED DESCRIPTION

Hereinafter, the present application is explained in further detail in conjunction with drawings and embodiments. It should be understood that the embodiments described herein are only intended to explain the present application, rather than limit the present application. In addition, it should be noted that, only some, rather than all, of the structures related to the present disclosure are show in the drawings for ease of description.

It is to be noted that the embodiments of the present disclosure described below may be implemented alone or in combination with each other, which is not specifically limited herein. References to "and/or" in the embodiments of the present disclosure are intended to include any of one or more associated listed items and all combinations thereof. Terms such as "first" and "second" are used when describing various components in the embodiment of the present disclosure, in order to distinguish a component from another, rather than to limit the components. Moreover, unless indicated clearly in context otherwise, the singular forms with article "a" or "an" are intended to include the plural forms.

The conventional method for charging an electric vehicle mainly relies on an application program installed on a user device (such as a mobile phone, tablet computers, and the like). A driver of the electric vehicle places an order, starts charging the electric vehicle, and pays the order by means of the user device. A charging station includes multiple charging piles, and each of the charging piles is equipped with at least two charging guns. The charging guns are each assigned with a unique QR code by an operator. The driver of the electric vehicle arrives at a charging station for charging the electric vehicle with a charging client application program. The driver of the electric vehicle turns on the rear camera on a mobile phone to scan the QR code and start a charging client application program to parse the QR code, to locate the selected charging gun to start charging. This method does not require the user to manually input a series of code numbers that are irregular and easy to make mistakes. However, an efficiency of scanning a QR code by a user will be substantially reduced at night or under a strong light condition; and the QR code may fail to be scanned if is damaged or stained.

To this end, a method and system for charging an electric vehicle, and a storage medium are provided in the present disclosure. With the charging method, a charging cloud platform may determine a target charging user based on positioning information reported by the user and transmit the user a charging gun list including to-be-determined charging guns in a charging station, and the user may select a target charging gun for charging. In this way, positioning and selecting of a user is realized at a charging cloud platform, which avoids the user from scanning a code, and is thereby applicable for charging an electric vehicle under various conditions and lights.

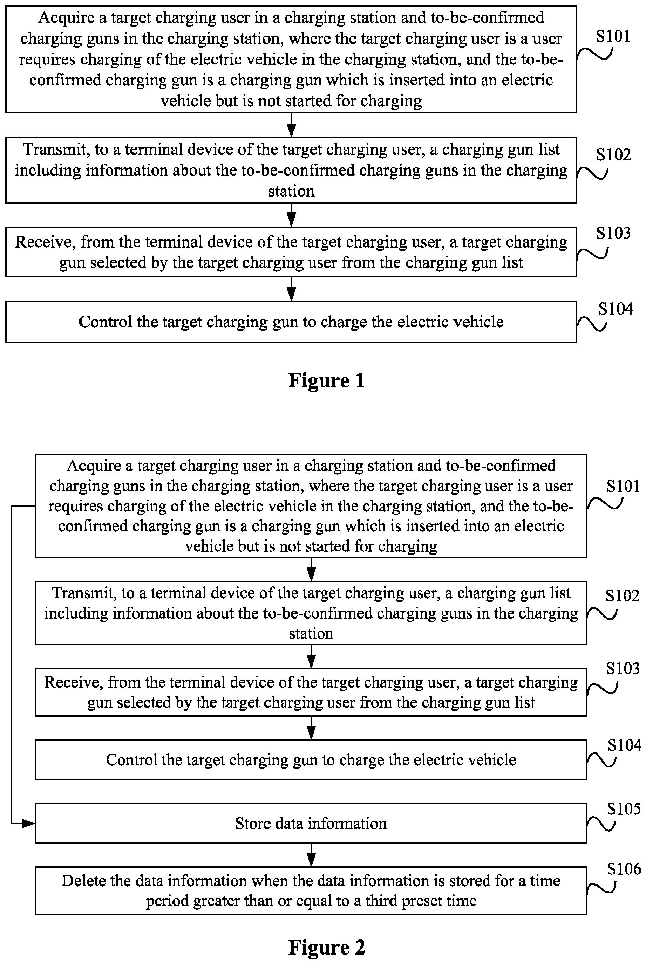

Figure 1 shows a schematic flowchart of a method for charging an electric vehicle according to an embodiment of the present disclosure. As shown in Figure 1, the method in the embodiment is applicable to a charging cloud platform, and the method includes steps S101 to S104.

In step S101, a target charging user in a charging station is acquired, and to-be-confirmed charging guns in the charging station are acquired. The target charging user is a user requires charging of the electric vehicle in the charging station, and the to-be-confirmed charging gun is a charging gun which is inserted into an electric vehicle but is not started for charging.

It can be understood that step S101 includes two sub-steps, i.e., a sub-step of acquiring a target charging user in the charging station and a sub-step of acquiring to-be-confirmed charging guns in the charging station. A sequence of executing the two sub-steps is not limited. In order to save server resources, a charging cloud platform generally first acquires the target charging user in the charging station, and then acquires the to-be-confirmed charging guns in the charging station.

In embodiments, the target charging user in the charging station may be acquired by the charging cloud platform through any one of the following two implementations.

In the first implementation, the method for the charging cloud platform to acquire a target charging user in a charging station includes steps A1 to A3 as follows.

In step A1, data information transmitted from a terminal device through an application program is received, where the data information includes user information of the application program and current location information of the terminal device.

The application program is installed on a terminal device of a driver of an electric vehicle, and is specially used for charging the electric vehicle. The application program may upload data information to the charging cloud platform every time it is started or running in the background. A scenario to which the application program is applicable includes, but is not limited to, that a driver of an electric vehicle downloads the application program and sign in for the first time, that the driver of the electric vehicle requires charging of the electric vehicle, and that the driver of the electric vehicle drives the electric vehicle on the way to a charging station for charging or on the way back after the electric vehicle is charged.

From the above analysis, it can be seen that a charging event does not need to occur in all of the scenarios where the application program is started. Therefore, it is necessary to determine, based on the data information from the application program, whether the driver of the electric vehicle is the target charging user in the charging station.

In addition, the positioning information mentioned in the embodiments of the present disclosure may be any one of latitude and longitude information, Global Positioning System (GPS) positioning information, and BeiDou Satellite Navigation System (BDS) positioning information.

In step A2, it is determined whether a position indicated by the current positioning information is within a preset range, where the preset range covers at least a geographic range of the charging station.

In step A3, it is determined that the user operating the terminal device is the target charging user if the position indicated by the current positioning information is within the preset range.

The preset range covering at least a geographic range of the charging station means that: the preset range is the same as the geographic range where the charging station is located, that is, the preset range coincides with the geographic range where the charging station is located; or the preset range is larger than the geographic range where the charging station is located and the charging station is within the preset range.

In a case where the preset range coincides with the geographic range of the charging station, it is determined, by the charging cloud platform, whether the position indicated by the current positioning information is within the charging station, and if the position indicated by the current positioning information is within the charging station, it is determined that the user operating the terminal device is the target charging user.

In a case where the preset range is larger than the geographic range of the charging station and the charging station is located within the preset range, it is determined, by the charging cloud platform, whether the position indicated by the current positioning information is within the preset range, and if the position indicated by the current positioning information is within the preset range, it is determined that the user operating the terminal device is the target charging user.

The first implementation is simple and easy to handle, but may have low determining accuracy. Therefore, a second implementation for the charging cloud platform to acquire the target charging user in the charging station is further provided in the present disclosure, including steps B 1 to B5 as follows.

In step B1, data information transmitted from the terminal device through the application program is received, where the data information includes user information of the application program and current location information of the terminal device.

In step B2: it is determined whether the position indicated by the current location information is within a preset range, where the preset range covers at least a geographic range of the charging station.

In step B3, real-time positioning information of the terminal device is acquired during a first preset time period, in a case where the position of the current positioning information is within the preset range.

In step B4, it is determined whether positions indicated by the real-time positioning information of the terminal device acquired during the first preset time period are all within the preset range.

In step B5, it is determined that the user operating the terminal device is the target charging user if the positions indicated by the real-time positioning information of the terminal device acquired during the first preset time period are all within the preset range.

This implementation is different from the first implementation in that: in a case where the position indicated by the current positioning information is within the present range, the charging cloud platform acquires real-time positioning information of the terminal device, and determines whether positions indicated by the real-time positioning information of the terminal device within the first preset time period are all within the preset range, and determines that the user operating the terminal device is the target charging user only in a case where the positions indicated by the real-time positioning information of the terminal device within the first preset time period are all within the preset range.

In this way, a driver of an electric vehicle who only drives passing by and does not require charging of the electric vehicle may be excluded.

In addition, the first preset time period may be set based on actual need, to 3 minutes, 5 minutes, or 10 minutes, for example.

In embodiments, the to-be-confirmed charging guns in the charging station may be acquired by the charging cloud platform through any one of the following two implementations.

In the first implementation, for any charging gun in the charging station, a first signal, which is triggered when the charging gun is pulled out of a charging pile to which the charging gun belongs, is received by the charging cloud platform from the charging pile; a second signal, which is triggered when the charging gun is inserted into the electric vehicle, is received by the charging cloud platform from the charging pile; the charging gun is marked as the to-be-confirmed charging gun in a case where an interval between a time when the first signal is received and a time when the second signal is received does not 2. exceed a second preset time period.

The second preset time period may be set based on actual need, to 3 minutes, 5 minutes, or 10 minutes, for example.

With the first implementation, a situation where an operation of inserting the charging gun into the electric vehicle and an operation of pulling the charging gun out of the charging pile are not performed by a same person can be avoided.

In the second implementation, for any charging gun in the charging station, a second signal, which is triggered when the charging gun is inserted into the electric vehicle, is received by the charging cloud platform from a charging pile to which the charging gun belongs; and the charging gun is marked as the to-be-confirmed charging gun in response to the second signal.

Compared with the first implementation, the second implementation has a simple process and is easy to implement.

The first implementation and the second implementation are both based on a resistance detection module provided on the charging gun. When a charging gun is pulled out of the charging pile or inserted into the electric vehicle, signals are triggered by the resistance detection module and uploaded to the charging cloud platform.

In step S102, a charging gun list is transmitted to the terminal device of the target charging user, where the charging gun list includes information about the to-be-confirmed charging guns in the charging station. The charging gun list may include information about all the to-be-confirmed charging guns in the charging station.

In step S 103, information about a target charging gun selected by the target charging user from the charging gun list is received from the terminal device of the target charging user.

Generally, A large charging station may have a dozen or even hundreds of charging piles, and each of the charging piles is equipped with two charging guns. There may not be too many to-be-confirmed charging guns in the charging station at the same time, which is convenient for the target charging user to look through.

In step S104, the target charging gun is controlled to charge the electric vehicle.

On the basis of the foregoing embodiment, Figure 2 shows a schematic flowchart of a method for charging an electric vehicle according to an embodiment of the present disclosure. As shown in Figure 2, the method further includes steps S105 to S106.

In step S105, the data information is stored.

In step S106, the data information is deleted when the data information is stored for a time period greater than or equal to a third preset time.

Due to the limited capacity of the database for storing data, the charging cloud platform needs to periodically delete historical data stored for a time exceeding the third preset time period. Generally, the third preset time period is greater than a time period for charging an electric vehicle, such as 12 hours or 15 hours.

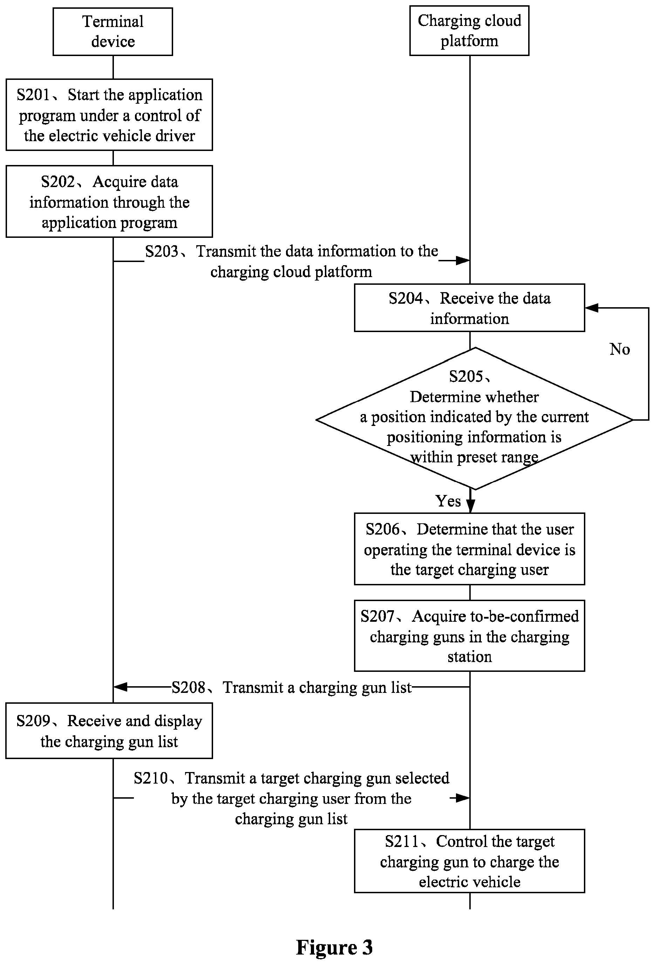

Figure 3 shows an interaction schematic diagram of a method for charging an electric vehicle according to an embodiment of the present disclosure. As shown in Figure 3, the method includes steps S201 to S 211.

In S201, the terminal device starts the application program under a control of the electric vehicle driver.

In S202, the terminal device acquires data information through the application program and transmits the data information to the charging cloud platform.

The data information includes user information of the application program and current positioning information of the terminal device.

In S203, the terminal device transmits the data information to the charging cloud platform.

In S204, the charging cloud platform receives the data information transmitted by the terminal device through the application program.

In S205, the charging cloud platform determines whether a position indicated by the current positioning information is within a preset range.

The preset range covers at least a geographic range of the charging station.

In S206, the charging cloud platform determines that the user operating the terminal device is the target charging user, in a case where the position indicated by the current positioning information is within the preset range.

The process returns to step S203 if the position indicated by the current positioning information is not within the preset range.

In S207, the charging cloud platform acquires to-be-confirmed charging guns in the charging station.

In S208, the charging cloud platform transmits a charging gun list to the terminal device of the target charging user.

The charging gun list includes information of all of the to-be-confirmed charging guns in the charging station.

In S209, the terminal device of the target charging user receives and displays the charging gun list.

In S210, the terminal device of the target charging user transmits, to the charging cloud platform, information about a target charging gun selected by the target charging user from the charging gun list.

In S211, the charging cloud platform controls the target charging gun to charge the electric vehicle.

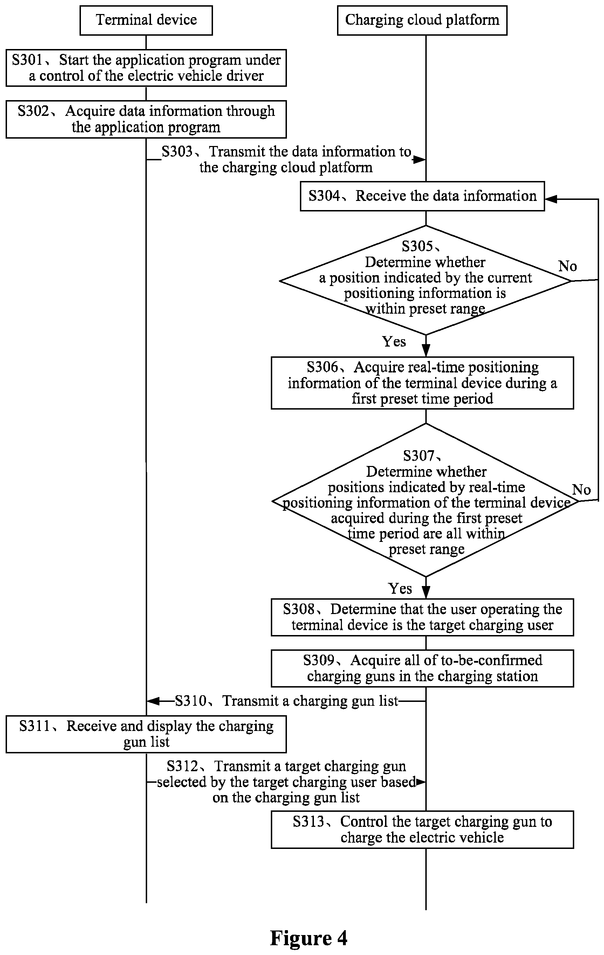

In another example, Figure 4 shows an interaction schematic diagram of a method for charging an electric vehicle according to another embodiment of the present disclosure. As shown in Figure 4, the method includes steps S301 to S313.

In S301, the terminal device starts the application program under a control of the electric vehicle driver.

In S302, the terminal device acquires data information through the application program and transmits the data information to the charging cloud platform.

The data information includes user information of the application program and current positioning information of the terminal device.

In S303, the terminal device transmits the data information to the charging cloud platform.

In S304, the charging cloud platform receives the data information transmitted by the terminal device through the application program.

In S305, the charging cloud platform determines whether the position indicated by the current positioning information is within a preset range.

The preset range covers at least a geographic range of the charging station.

The process returns to step S303 if the position indicated by the current positioning information is not within the preset range.

In S306, the charging cloud platform acquires real-time positioning information of the terminal device during a first preset time period, in a case where the position indicated by the current positioning information is within the preset range.

In S307, the charging cloud platform determines whether positions indicated by the real-time positioning information of the terminal device acquired within the first preset time period are all within the preset range.

In S308, in a case where the positions indicated by the real-time positioning information of the terminal device acquired during the first preset time period are all within the preset range, the charging cloud platform determines that the user operating the terminal device is the target charging user.

The process returns to step S303 in a case where the positions indicated by the real-time positioning information of the terminal device acquired during the first preset time period are not all within the preset range.

In S309, the charging cloud platform acquires to-be-confirmed charging guns in the charging station.

In S310, the charging cloud platform transmits a charging gun list to the terminal device of the target charging user.

The charging gun list includes information of all of the to-be-confirmed charging guns in the charging station.

In S311, the terminal device of the target charging user receives and displays the charging gun list.

In S312, the terminal device of the target charging user transmits, to the charging cloud platform, information about a target charging gun selected by the target charging user from the charging gun list.

In S313, the charging cloud platform controls the target charging gun to charge the electric vehicle.

In the present disclosure, a method for charging an electric vehicle is provided. In the method, a target charging user of a charging station is acquired and the to-be-confirmed charging guns in the charging station are acquired, where the target charging user is a user who requires charging of the electric vehicle in the charging station, and the to-be-confirmed charging guns is a charging gun which is inserted into an electric vehicle but is not started for charging; a charging gun list is transmitted to a terminal device of the target charging user, where the charging gun list includes information about the to-be-confirmed charging guns in the charging station; information about a target charging gun selected by the target charging user from the charging gun list is received from the terminal device of the target charging user; and the target charging gun is controlled to charge the electric vehicle. With the charging method, the charging cloud platform may determine a target charging user based on positioning information reported by the user and transmit the user a charging gun list including the to-be-determined charging guns in a charging station, and the user may select a target charging gun for charging. In this way, positioning and selecting of a user is realized at a charging cloud platform, which avoids the user from scanning a code, and is thereby applicable for charging an electric vehicle under various conditions and lights.

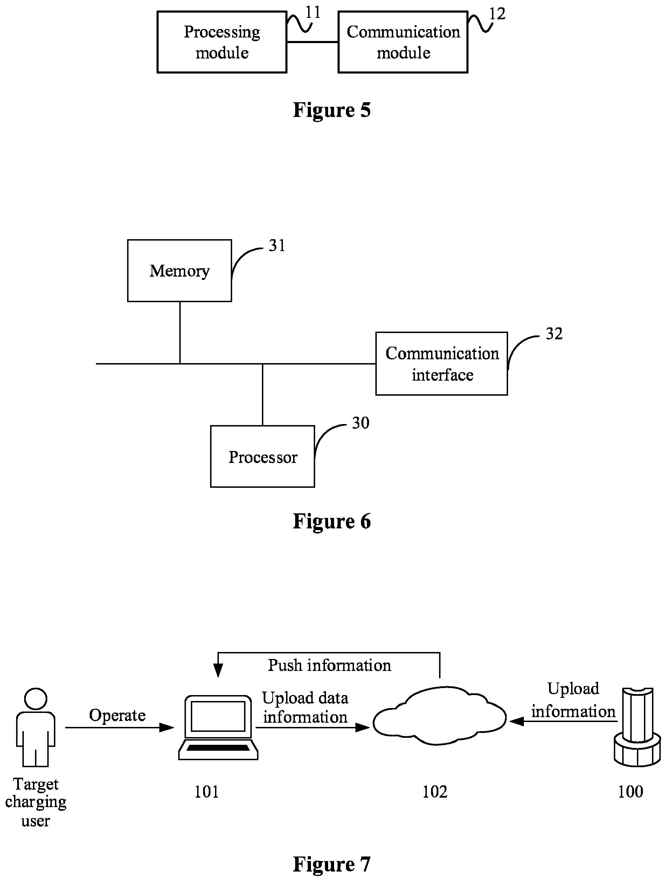

Figure 5 is a schematic structural diagram of a charging cloud platform according to an example of the present disclosure. As shown in Figure 5, the charging cloud platform includes a processing module 11 and a communication module 12.

The processing module 11 is configured to acquire a target charging user in a charging station and to-be-confirmed charging guns in the charging station. The target charging user is a user who requires charging of the electric vehicle in the charging station, and the to-be-confirmed charging gun is a charging gun which is inserted into an electric vehicle but is not started for charging.

The communication module 12 is configured to: transmit, to a terminal device of the target charging user, a charging gun list including information about the to-be-confirmed charging guns in the charging station; and receive, from the terminal device of the target charging user, information about a target charging gun selected by the target charging user from the charging gun list.

The processing module 11 is further configured to control the target charging gun to charge the electric vehicle.

The charging cloud platform in the embodiment performs the method for charging an electric vehicle in the above embodiments. Principles and technical effects of the charging cloud platform are similar to those described in the above embodiments, and are not repeated herein.

In an example, the communication module 12 is configured to receive data information transmitted from the terminal device through an application program, where the data information includes user information of the application program and current positioning information of the terminal device. The processing module 11 is configured to determine, based on the data information, whether a user operating the terminal device is the target charging user.

In an embodiment, the processing module 11 is configured to determine whether the position indicated by the current positioning information is within a preset range, where the preset range covers at least a geographic range of the charging station; and determine that the user operating the terminal device is the target charging user if the position indicated by the current positioning information is within the preset range.

In an embodiment, the processing module 11 is further configured to: after determining that the position indicated by the current location information is within the preset range, acquire real-time positioning information of the terminal device during a first preset time period; determine whether positions indicated by the real-time positioning information of the terminal device acquired during the first preset time period are all within the preset range; and determine that the user operating the terminal device is the target charging user if the positions indicated by the real-time positioning information of the terminal device acquired during the first preset time period are all within the preset range.

In an example, for any charging gun in the charging station, the communication module 12 is further configured to: receive, from a charging pile to which the charging gun belongs, a first signal, where the first signal is triggered when the charging gun is pulled out of the charging pile; and receive, from the charging pile, a second signal, where the second signal is triggered when the charging gun is inserted into an electric vehicle. The processing module 11 is further configured to mark the charging gun as the to-be-confirmed charging gun in a case where an interval between a time when the first signal is received and a time when the second signal is received does not exceed a second preset time period.

In an example, for any charging gun in the charging station, the communication module 12 is further configured to receive, from a charging pile to which the charging gun belongs, a second signal, where the second signal is triggered when the charging gun is inserted into an electric vehicle. The processing module 11 is further configured to mark, in response to the second signal, the charging gun as the to-be-confirmed charging gun.

In an embodiment, the processing module 11 is further configured to: store the data information; and delete the data information when the data information is stored for a time period greater than or equal to a third preset time.

Figure 6 shows a schematic structural diagram of a charging cloud platform according to another example of the present disclosure. As shown in Figure 6, the charging cloud platform includes a processor 30, a memory 31, and a communication interface 32. There may be a single or multiple processors 30 in the charging cloud platform. In Figure 6, one processor 30 is shown as an example. The processor 30, the memory 31, and the communication interface 32 in the charging cloud platform may be connected via a bus or other methods. In Figure 6, a connection via a bus is shown as an example. The bus represents one or more of several types of bus structures, including a memory bus or a memory controller, a peripheral bus, a graphics acceleration port, a processor, or a local bus using any of multiple bus structures.

As a computer-readable storage medium, the memory 31 may be configured to store a software program, a computer-executable program, and a module, such as a program instruction/module corresponding to the method in the embodiments of the present disclosure. The processor 30 executes the software program, instruction, and module stored in the memory 31, to perform at least one functional application and data processing of the charging cloud platform, and thereby realize the above-mentioned method.

The memory 31 may include a storage program area and a storage data area. The storage program area may store an operating system and an application program required by at least one function. The storage data area may store data created based on the use of the charging cloud platform, and the like. In addition, the memory 31 may include a high-speed random access memory, and may further include a non-volatile memory, such as at least one magnetic disk storage device, a flash memory device, or other non-volatile solid-state storage devices. In some instances, the memory 31 may include memories remotely provided with respect to the processor 30, and these remote memories may be connected to the charging cloud platform through a network. Examples of the networks include, but are not limited to, the Internet, a corporate intranet, a local area network, a mobile communication network, and a combination thereof.

The communication interface 32 may be configured to receive and send data.

Figure 7 shows a schematic structural diagram of a system for charging an electric vehicle according to an embodiment of the present disclosure. As shown in Figure 7, the system for charging an electric vehicle includes: at least one charging station 100 (shown in Figure 7 as a charging pile, which is a smallest charging unit of the charging station, for example), a terminal device 101 installed with an application program, and a charging cloud platform 102 according to any of the above-mentioned embodiments.

A computer readable storage medium is further provided according to an embodiment of the present disclosure. The computer readable storage medium stores a computer program. The computer program is executed to implement the method for charging an electric vehicle provided in the embodiments of the present disclosure.

The computer readable storage medium in the embodiment of the present disclosure may be implemented as a single computer readable medium or a combination of multiple computer readable media. The computer readable medium may be a computer readable signal medium or a computer readable storage medium. The computer readable storage medium may include, but is not limited to, a system, an apparatus, or a device in an electronic, magnetic, optical, electromagnetic, infrared, or semi-conductive form, or any combination thereof. The computer readable storage medium may include, but is not limited to, an electrical connection with one or more wires, a portable computer disk, a hard disk, a random access memory (RAM), a read-only memory (ROM), an erasable programmable read-only memory (EPROM), a flash memory, an optical fiber, a portable compact disc read-only memory (CD-ROM), a light storage device, a magnetic storage device or any combination thereof. In the present disclosure, the computer readable storage medium may be any tangible medium containing or storing a program, and the program may be used by or in combination with an instruction execution system, apparatus, or device.

The computer readable signal medium may include a data signal transmitted in a baseband or transmitted as a part of a carrier, and the data signal carries computer readable program codes. The transmitted data signal may be in various forms, including but not limited to an electromagnetic signal, an optical signal or any proper combination thereof. The computer readable signal medium may be any computer readable medium other than the computer readable storage medium, and can send, propagate or transmit programs to be used by or in combination with an instruction execution system, apparatus or device.

The program codes stored in the computer readable medium may be transmitted via any proper medium including, but not limited to, wireless, electrical wire, an optical cable, radio frequency (RF) and the like, or any proper combination thereof.

The computer program code for performing the operations disclosed in the embodiments of the present disclosure may be written in one or more programming languages or combinations thereof. The programming languages include an object-oriented programming language, such as Java, Smalltalk, and C++, and a conventional procedural programming language, such as C language or a similar programming language. The program code may be executed entirely on a user computer, partially on the user computer, as a standalone software package, partially on the user computer and partially on a remote computer, or entirely on the remote computer or a server. In a case involving a remote computer, the remote computer may be connected to a user computer or an external computer through any kind of network including a Local Area Network (LAN) or a Wide Area Network (WAN). For example, the remote computer may be connected to the external computer through an Internet connection supported by an Internet service provider.

Those skilled in the art should understand that the term terminal device encompasses any suitable type of wireless user equipment, such as a mobile phone, a portable data processing device, a portable web browser, or a vehicle-mounted mobile station.

In general, the various embodiments of the present disclosure may be implemented in hardware or dedicated circuits, software, logic or any combination thereof. For example, some aspects may be implemented in hardware, while other aspects may be implemented in firmware or software that may be executed by a controller, microprocessor, or other computing device, although the present disclosure is not limited thereto.

The embodiments of the present disclosure may be implemented by executing computer program instructions by a data processor of a mobile device, for example, in a processor entity, or by hardware, or by a combination of software and hardware. The computer program instructions may be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent program steps, or may represent logic circuits, modules, and function s interconnected with each other, or may represent a combination of program steps and logic circuits, modules, and functions. A computer program may be stored on a memory. The memory may be of any type suitable for a local technical environment and may be implemented using any suitable data storage technology, including but not limited to read-only memory (ROM), random access memory (RAM), optical storage devices and systems (digital multi-function discs DVD or CD), and the like. The computer-readable medium may include a non-transitory storage medium. The data processor may be of any type suitable for a local technical environment, including but not limited to a general-purpose computer, a special-purpose computer, a microprocessor, a digital signal processor (DSP), an application specific integrated circuit (ASIC), a field-programmable gate array (FGPA) and a processor based on multi-core processor architecture.

## Claims

1. A method for charging an electric vehicle, **characterized in that** the method comprises:
acquiring (S101) a target charging user in a charging station and to-be-confirmed charging guns in the charging station, wherein the target charging user is a user who requires charging of an electric vehicle in the charging station, and the to-be-confirmed charging gun is a charging gun which is inserted into an electric vehicle but is not started for charging;
transmitting (S102), to a terminal device of the target charging user, a charging gun list comprising information about the to-be-confirmed charging guns in the charging station;
receiving (S103), from the terminal device of the target charging user, information about a target charging gun selected by the target charging user from the charging gun list; and
controlling (S104) the target charging gun to charge the electric vehicle;
wherein the acquiring a target charging user in a charging station comprises:
receiving (S304)
data information transmitted from the terminal device through an application program, wherein the data information comprises user information of the application program and current positioning information of the terminal device; and
determining, (S308) based on the data information, whether a user operating the terminal device is the target charging user.

2. The method for charging an electric vehicle according to claim 1, wherein the determining whether a user operating the terminal device is the target charging user comprises:
determining (S305) whether a position indicated by the current positioning information is within a preset range, wherein the preset range covers at least a geographic range of the charging station; and
determining that the user operating the terminal device is the target charging user if the position indicated by the current positioning information is within the preset range.

3. The method for charging an electric vehicle according to claim 2, wherein after determining that the position indicated by the current positioning information is within the preset range, the method further comprises:
acquiring (S306) real-time positioning information of the terminal device during a first preset time period;
determining (S307) whether positions indicated by the real-time positioning information of the terminal device acquired during the first preset time period are all within the preset range; and
determining (S308) that the user operating the terminal device is the target charging user if the positions indicated by the real-time positioning information of the terminal device acquired during the first preset time period are all within the preset range.

4. The method for charging an electric vehicle according to claim 1, further comprises:
for any charging gun in the charging station,
receiving, from a charging pile to which the charging gun belongs, a first signal, wherein the first signal is triggered when the charging gun is pulled out of the charging pile;
receiving, from the charging pile, a second signal, wherein the second signal is triggered when the charging gun is inserted into an electric vehicle; and
marking the charging gun as the to-be-confirmed charging gun in a case where an interval between a time when the first signal is received and a time when the second signal is received does not exceed a second preset time period.

5. The method for charging an electric vehicle according to claim 1, further comprising:
for any charging gun in the charging station:
receiving, from a charging pile to which the charging gun belongs, a second signal, wherein the second signal is triggered when the charging gun is inserted into an electric vehicle; and
marking, in response to the second signal, the charging gun as the to-be-confirmed charging gun.

6. The method for charging an electric vehicle according to claim 1, wherein after receiving the data information transmitted form the terminal device through the application program, the method further comprises:
storing (S105) the data information; and
deleting (S106) the data information when the data information is stored for a time period greater than or equal to a third preset time.

7. The method for charging an electric vehicle according to claim 1, wherein the positioning information comprises any one of latitude and longitude information, Global Positioning System, GPS, positioning information, and BeiDou Satellite Navigation System, BDS, positioning information.

8. A system for charging an electric vehicle, the system comprising
at least one charging station,
a terminal device installed with an application program, and
a charging cloud platform comprising a processor, the system **characterized in that** the processor is configured to perform the method for charging an electric vehicle according to any one of claims 1 to 7.

9. A computer-readable storage medium storing a computer program, **characterized in that** the computer program, when being executed by a processor, implements the method for charging an electric vehicle according to any one of claims 1 to 7.

## Patentansprüche

1. Verfahren zum Laden eines elektrischen Fahrzeugs, **dadurch gekennzeichnet, dass** das Verfahren Folgendes umfasst:
Erfassen (S101) eines Ziel-ladenden Benutzers in einer Ladestation und von zu bestätigenden Ladepistolen in der Ladestation, wobei der Ziel-ladende Benutzer ein Benutzer ist, der ein Laden eines elektrischen Fahrzeugs in der Ladestation erfordert, und die zu bestätigende Ladepistole eine Ladepistole ist, die in ein elektrisches Fahrzeug eingesetzt wird, aber nicht zum Laden gestartet wird;
Übertragen (S102), an eine Endvorrichtung des Ziel-ladenden Benutzers, einer Ladepistolenliste, die Informationen über die zu bestätigenden Ladepistolen in der Ladestation umfasst;
Empfangen (S103), von der Endvorrichtung des Ziel-ladenden Benutzers, von Informationen über eine Ziel-ladende Pistole, die von dem Ziel-ladenden Benutzer aus der Ladepistolenliste ausgewählt wird; und
Steuern (S104) der Ziel-ladenden Pistole, um das elektrische Fahrzeug zu laden;
wobei das Erfassen eines Ziel-ladenden Benutzers in einer Ladestation Folgendes umfasst:
Empfangen (S304) von Dateninformationen, die über ein Anwendungsprogramm von der Endvorrichtung übertragen werden, wobei die Dateninformationen Benutzerinformationen des Anwendungsprogramms und aktuelle Positionierungsinformationen der Endvorrichtung umfassen; und
Bestimmen (S308), auf Grundlage der Dateninformationen, ob ein Benutzer, der die Endvorrichtung bedient, der Ziel-ladende Benutzer ist.

2. Verfahren zum Laden eines elektrischen Fahrzeugs nach Anspruch 1, wobei das Bestimmen, ob ein Benutzer, der die Endvorrichtung bedient, der Ziel-ladende Benutzer ist, Folgendes umfasst:
Bestimmen (S305), ob eine Position, die durch die aktuellen Positionierungsinformationen angegeben wird, innerhalb eines voreingestellten Bereichs liegt, wobei der voreingestellte Bereich mindestens einen geografischen Bereich der Ladestation abdeckt; und
Bestimmen, dass der Benutzer, der die Endvorrichtung bedient, der Ziel-ladende Benutzer ist, wenn die Position, die durch die aktuellen Positionierungsinformationen angegeben wird, innerhalb des voreingestellten Bereichs liegt.

3. Verfahren zum Laden eines elektrischen Fahrzeugs nach Anspruch 2, wobei nach dem Bestimmen, dass die Position, die durch die aktuellen Positionierungsinformationen angegeben wird, innerhalb des voreingestellten Bereichs liegt, das Verfahren ferner Folgendes umfasst:
Erfassen (S306) von Echtzeit-Positionierungsinformationen der Endvorrichtung während eines ersten voreingestellten Zeitraums;
Bestimmen (S307), ob Positionen, die durch die Echtzeit-Positionierungsinformationen der Endvorrichtung angegeben werden, die während des ersten voreingestellten Zeitraums erfasst werden, alle innerhalb des voreingestellten Bereichs liegen; und
Bestimmen (S308), dass der Benutzer, der die Endvorrichtung bedient, der Ziel-ladende Benutzer ist, wenn die Positionen, die durch die Echtzeit-Positionierungsinformationen der Endvorrichtung angegeben werden, die während des ersten voreingestellten Zeitraums erfasst werden, alle innerhalb des voreingestellten Bereichs liegen.

4. Verfahren zum Laden eines elektrischen Fahrzeugs nach Anspruch 1, ferner umfassend: für eine beliebige Ladepistole in der Ladestation,
Empfangen, von einem Ladestapel, zu dem die Ladepistole gehört, eines ersten Signals, wobei das erste Signal ausgelöst wird, wenn die Ladepistole aus dem Ladestapel gezogen wird;
Empfangen, von dem Ladestapel, eines zweiten Signals, wobei das zweite Signal ausgelöst wird, wenn die Ladepistole in ein elektrisches Fahrzeug eingesetzt wird; und
Kennzeichnen der Ladepistole als die zu bestätigende Ladepistole in einem Fall, in dem ein Intervall zwischen einer Zeit, zu der das erste Signal empfangen wird, und einer Zeit, zu der das zweite Signal empfangen wird, einen zweiten voreingestellten Zeitraum nicht überschreitet.

5. Verfahren zum Laden eines elektrischen Fahrzeugs nach Anspruch 1, ferner umfassend:
für eine beliebige Ladepistole in der Ladestation:
Empfangen, von einem Ladestapel, zu dem die Ladepistole gehört, eines zweiten Signals, wobei das zweite Signal ausgelöst wird, wenn die Ladepistole in ein elektrisches Fahrzeug eingesetzt wird; und
Kennzeichnen, als Reaktion auf das zweite Signal, der Ladepistole als die zu bestätigende Ladepistole.

6. Verfahren zum Laden eines elektrischen Fahrzeugs nach Anspruch 1, wobei nach dem Empfangen der Dateninformationen, die von der Endvorrichtung über das Anwendungsprogramm übertragen werden, das Verfahren ferner Folgendes umfasst:
Speichern (S105) der Dateninformationen; und
Löschen (S106) der Dateninformationen, wenn die Dateninformationen für einen Zeitraum gespeichert wurden, der größer als oder gleich einer dritten voreingestellten Zeit ist.

7. Verfahren zum Laden eines elektrischen Fahrzeugs nach Anspruch 1, wobei die Positionierungsinformationen beliebige von Längen- und Breiteninformationen, Positionierungsinformationen des globalen Positionsbestimmungssystems, GPS, und Positionierungsinformationen des BeiDou-Satellitennavigationssystems, BDS, umfassen.

8. System zum Laden eines elektrischen Fahrzeugs, wobei das System Folgendes umfasst:
mindestens eine Ladestation,
eine Endvorrichtung, auf der ein Anwendungsprogramm installiert ist, und
eine Lade-Cloud-Plattform, die einen Prozessor umfasst, wobei das System **dadurch gekennzeichnet ist, dass** der Prozessor dazu konfiguriert ist, das Verfahren zum Laden eines elektrischen Fahrzeugs nach einem der Ansprüche 1 bis 7 durchzuführen.

9. Computerlesbares Speichermedium, auf dem ein Computerprogramm gespeichert ist, **dadurch gekennzeichnet, dass** das Computerprogramm, wenn es von einem Prozessor ausgeführt wird, das Verfahren zum Laden eines elektrischen Fahrzeugs nach einem der Ansprüche 1 bis 7 umsetzt.

## Revendications

1. Procédé de charge d'un véhicule électrique, **caractérisé en ce que** le procédé comprend :
l'acquisition (S101) d'un utilisateur de charge cible dans une station de charge et des pistolets de charge à confirmer dans la station de charge, dans lequel l'utilisateur de charge cible est un utilisateur qui requiert la charge d'un véhicule électrique dans la station de charge, et le pistolet de charge à confirmer est un pistolet de charge qui est inséré dans un véhicule électrique, mais qui n'est pas démarré pour la charge ;
la transmission (S102), à un dispositif terminal de l'utilisateur de charge cible, d'une liste de pistolets de charge comprenant des informations concernant les pistolets de charge à confirmer dans la station de charge ;
la réception (S103), du dispositif terminal de l'utilisateur de charge cible, d'informations concernant un pistolet de charge cible sélectionné par l'utilisateur de charge cible dans la liste de pistolets de charge ; et
la commande (S104) du pistolet de charge cible pour charger le véhicule électrique ;
dans lequel l'acquisition d'un utilisateur de charge cible dans une station de charge comprend :
la réception (S304) d'informations de données transmises depuis le dispositif terminal via un programme d'application, dans lequel les informations de données comprennent des informations d'utilisateur du programme d'application et des informations de positionnement actuel du dispositif terminal ; et
le fait de déterminer (S308), sur la base des informations de données, si un utilisateur utilisant le dispositif terminal est l'utilisateur de charge cible.

2. Procédé de charge d'un véhicule électrique selon la revendication 1, dans lequel le fait de déterminer si un utilisateur utilisant le dispositif terminal est l'utilisateur de charge cible comprend :
le fait de déterminer (S305) si une position indiquée par les informations de positionnement actuel se trouve dans une plage prédéfinie, dans lequel la plage prédéfinie couvre au moins une plage géographique de la station de charge ; et
le fait de déterminer que l'utilisateur utilisant le dispositif terminal est l'utilisateur de charge cible si la position indiquée par les informations de positionnement actuel se situe dans la plage prédéfinie.

3. Procédé de charge d'un véhicule électrique selon la revendication 2, dans lequel après avoir déterminé que la position indiquée par les informations de positionnement actuel se situe dans la plage prédéfinie, le procédé comprend en outre :
l'acquisition (S306) d'informations de positionnement en temps réel du dispositif terminal pendant une première période de temps prédéfinie ;
le fait de déterminer (S307) si les positions indiquées par les informations de positionnement en temps réel du dispositif terminal acquises pendant la première période de temps prédéfinie se trouvent toutes dans la plage prédéfinie ; et
le fait de déterminer (S308) que l'utilisateur utilisant le dispositif terminal est l'utilisateur de charge cible si les positions indiquées par les informations de positionnement en temps réel du dispositif terminal acquises pendant la première période de temps prédéfinie se trouvent toutes dans la plage prédéfinie.

4. Procédé de charge d'un véhicule électrique selon la revendication 1, comprenant en outre : pour tout pistolet de charge dans la station de charge,
la réception, d'une borne de charge à laquelle appartient le pistolet de charge, d'un premier signal, dans lequel le premier signal est déclenché lorsque le pistolet de charge est retiré de la borne de charge ;
la réception, de la borne de charge, d'un second signal, dans lequel le second signal est déclenché lorsque le pistolet de charge est inséré dans un véhicule électrique ; et
le marquage du pistolet de charge comme pistolet de charge à confirmer au cas où un intervalle entre un moment où le premier signal est reçu et un moment où le second signal est reçu ne dépasse pas une deuxième période de temps prédéfinie.

5. Procédé de charge d'un véhicule électrique selon la revendication 1, comprenant en outre :
pour tout pistolet de charge présent dans la station de charge :
la réception, d'une borne de charge à laquelle appartient le pistolet de charge, d'un second signal, dans lequel le second signal est déclenché lorsque le pistolet de charge est inséré dans un véhicule électrique ; et
le marquage, en réponse au second signal, du pistolet de charge comme étant le pistolet de charge à confirmer.

6. Procédé de charge d'un véhicule électrique selon la revendication 1, dans lequel après avoir reçu les informations de données transmises depuis le dispositif terminal via le programme d'application, le procédé comprend en outre :
le stockage (S105) des informations de données ; et
la suppression (S106) des informations de données lorsque les informations de données sont stockées pendant une période de temps supérieure ou égale à une troisième durée prédéfinie.

7. Procédé de charge d'un véhicule électrique selon la revendication 1, dans lequel les informations de positionnement comprennent l'une quelconque parmi des informations de latitude et de longitude, des informations de positionnement du système de positionnement global, GPS, et des informations de positionnement du système de navigation par satellite BeiDou, BDS.

8. Système de charge d'un véhicule électrique, le système comprenant :
au moins une station de charge,
un dispositif terminal installé avec un programme d'application, et
une plateforme en nuage de charge comprenant un processeur, le système étant **caractérisé en ce que** le processeur est configuré pour exécuter le procédé de charge d'un véhicule électrique selon l'une quelconque des revendications 1 à 7.

9. Support de stockage lisible par ordinateur stockant un programme informatique, **caractérisé en ce que** le programme informatique, lorsqu'il est exécuté par un processeur, met en œuvre le procédé de charge d'un véhicule électrique selon l'une quelconque des revendications 1 à 7.
